# EUROPÄISCHE PATENTSCHRIFT

(11) **EP 0 829 838 B1**
(45) Veröffentlichungstag und Bekanntmachung des Hinweises auf die Patenterteilung: **05.12.2001**
(21) Anmeldenummer: 97115301.0
(22) Anmeldetag: 04.09.1997
(51) Int. Cl.: G08G 1/0968

(54) **Verfahren zur Anzeige einer Richtungsinformation in einem Kraftfahrzeug und darauf bezogene Verwendung einer Anzeigeeinrichtung**
Method to display a direction information in a vehicle and use of a display device for this purpose
Procédé d'affichage d'une information de direction dans un véhicule et utilisation d'un dispositif d'affichage à cet effet

(30) Priorität: 12.09.1996 DE 19637011
(43) Veröffentlichungstag der Anmeldung: 18.03.1998
(73) Patentinhaber: ADAM OPEL AG, 65423 Rüsselsheim (DE)
(72) Erfinder: Berninger, Harald, Dipl.-Ing., 65428 Rüsselsheim (DE)

(56) Entgegenhaltungen:
- DE-A- 4 401 206
- FR-A- 2 665 564
- NL-A- 9 400 212
- KIRSON A M: "A COMPACT DRIVER INTERFACE FOR NAVIGATION AND ROUTE GUIDANCE" PACIFIC RIM TRANSTECH CONFERENCE VEHICLE NAVIGATION AND INFORMATION SYSTEMS CONFERENCE PROCEEDINGS, WASHINGTON, JULY 30 - AUG. 2, 1995, Nr. CONF. 6, 30.Juli 1995, INSTITUTE OF ELECTRICAL AND ELECTRONICS ENGINEERS, Seiten 61-66, XP000641135

## Beschreibung

Die Erfindung bezieht sich auf ein Verfahren, bei dem Richtungsinformationen in einem Kraftfahrzeug angezeigt werden, so daß der Fahrer eine Hilfestellung bei der Auffindung eines Fahrziels erhält. Ausgehend von der momentanen Position und Fahrtrichtung soll also angezeigt werden, in welcher Richtung das Fahrziel bzw. ein Zwischenziel liegt. Dabei ist das Vorhandensein einer Straßenkarte im Fahrzeug nicht zwingend erforderlich.

Verfahren der genannten Art sind bereits bekannt. Richtungsinformationen werden im allgemeinen auf Graphikbildschirmen im Fahrzeug beispielsweise als Pfeile dargestellt. Dies ist in der DE-OS 43 27 780 und bei Verwendung spezieller Pfeile in der DE-PS 44 12 859, DE-OS 44 01 206 und DE-OS 195 31 822 offenbart.

In der DE-PS 31 14 908 und DE-PS 31 04 497 sind spezielle Anzeigegeräte vorgesehen, die die Himmelsrichtung zum Ziel und/oder eine Gradzahl-Angabe anzeigen. Auch im Verfahren nach der DE-PS 29 25 656 wird ein spezielles Ausgabegerät benutzt, wobei Fahranweisungen optisch und/oder akustisch ausgegeben werden.

Bekannte Verfahren für die Ziel-Richtungsinformation bergen einige Nachteile in sich. Es ist ein hoher Aufwand vonnöten, wenn gesonderte Anzeigegeräte oder Graphikbildschirme im Fahrzeug vorgesehen werden müssen, die nicht zur Grundausstattung gehören. Nicht nur die Kosten sind von Nachteil, auch die Unterbringung dieser zusätzlichen Anzeigen ist problematisch.

Nicht ratsam erscheint die Anzeige der Himmelsrichtung oder von Gradzahlen, da hier immer noch ein Gedankengang vonnöten ist, um die tatsächliche Richtung zum Ziel zu ermitteln. Gleichfalls nicht ratsam ist die Anzeige der Richtung durch Angabe von Uhrzeiten (Ziel in 1:00 Uhr, Ziel in 5:00 Uhr ...) oder durch Textangaben, da Leseoperationen während der Fahrt zu Ablenkungen führen, die nicht immer akzeptabel sind.

Es ist Aufgabe der Erfindung, ein Verfahren zu schaffen, mit dessen Hilfe Ziel-Richtungsinformationen ohne großen Aufwand-im Kraftfahrzeug angezeigt werden können, ohne daß eine unzumutbare Ablenkung des Fahrers erfolgt.

Zur Lösung dieser Aufgabe zeichnet sich das erfindungsgemäße Verfahren durch die im Patentanspruch 1 angegebenen Merkmale aus. Weitere Einzelheiten ergeben sich aus den Patentansprüchen 2 bis 6. Bezüglich einer erfindungsgemäßen Verwendung einer an sich bekannten Anzeigeeinrichtung wird auf den Patentanspruch 7 verwiesen.

Alphanumerische Anzeigeeinrichtungen gehören heute zur serienmäßigen Ausstattung vieler Fahrzeuge. Zumindest wenn Audio-Geräte vorgesehen sind, sind auch derartige Anzeigeeinrichtungen im Kraftfahrzeug angeordnet. Sie zeichnen sich dadurch aus, daß ein fester Satz alphanumerischer Zeichen anzeigbar ist, was zu einer einfachen Ansteuerelektronik führt. Diese Anzeigeeinrichtungen werden nun auch zur Anzeige von Richtungsinformationen genutzt, so daß keine Zusatzkosten für Kraftfahrzeug-Ausstattungselemente entstehen.

Die Richtungsinformation besteht aus einem Positionszeichen und aus einem Zielzeichen. Zumindest das Zielzeichen wird von einem oder mehreren alphanumerischen Zeichen gebildet und auf der genannten alphanumerischen Anzeigeeinrichtung angezeigt. Das Positionszeichen kann ebenfalls von alphanumerischen Zeichen gebildet und auf der Anzeigeeinrichtung angezeigt werden, oder es ist fest in der Mitte zwischen zwei Zeilen der Anzeigeeinrichtung auf deren Gehäuse als Sinnbild angeordnet.

Aus der variablen Relativposition des Zielzeichens zum Positionszeichen sind jetzt direkte Rückschlüsse über die Lage des Ziels zu ziehen. Zu besonders klaren Rückschlüssen führt ein Verfahren, bei dem zur Bildung des Zielzeichens variable alphanumerische Zeichen Verwendung finden. So ist auch eine einzige Zeile alphanumerischer Zeichen der Anzeigeeinrichtung ausreichend, um die Ziel-Richtungsinformation darzustellen. Von Vorteil, da besonders schnell zu erfassen, ist jedoch die Nutzung einer zweizeiligen Anzeigeeinrichtung bzw. zweier Zeilen einer mehrzeiligen Anzeigeeinrichtung.

Details der Erfindung werden im folgenden anhand von Ausführungsbeispielen erläutert. Von den zugehörigen Zeichnungen zeigt:
- Fig. 1a bis 1e:: eine Anzeigeeinrichtung bei Anzeige verschiedener Ziel-Richtungsinformationen in schematischer Darstellungsweise;
- Fig. 2:: eine Anzeigeeinrichtung anderer Ausführung in schematischer Darstellungsweise;
- Fig. 3a und 3b:: eine Anzeigeeinrichtung anderer Ausführung bei schematischer Darstellung zweier verschiedener Ziel-Richtungsinformationen.

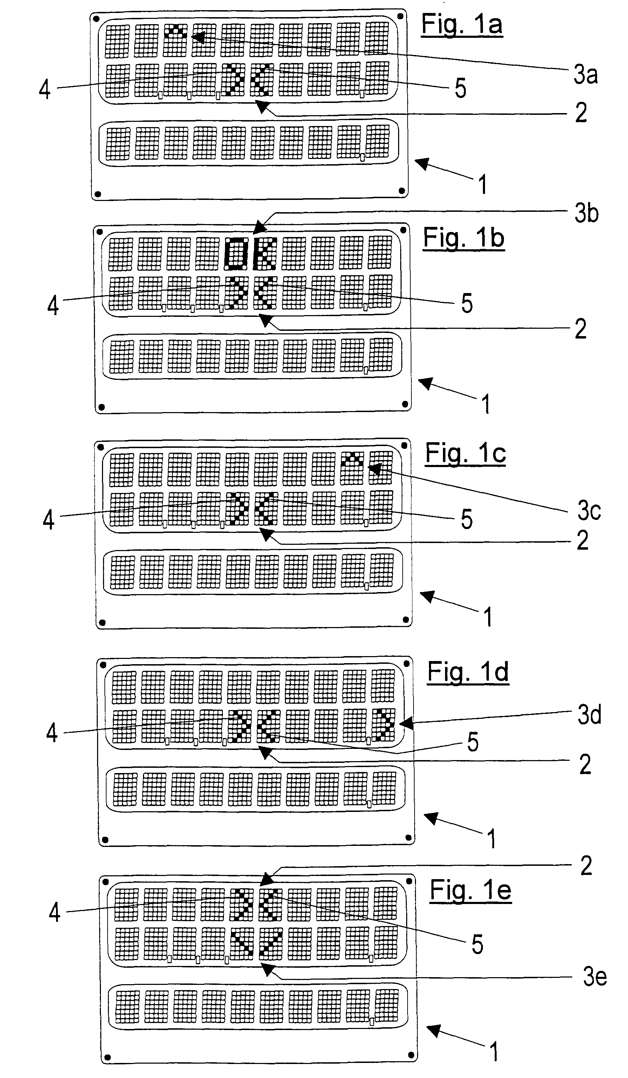

In den Figuren 1a bis 1e ist eine dreizeilige Anzeigeeinrichtung 1 dargestellt, die in der Armaturentafel eines Kraftfahrzeugs angeordnet sein kann. Sie kann sowohl der Fahrerinformation über Fahrzeugdaten (Geschwindigkeit, Reichweite, Kraftstoffverbrauch ...) als auch als Radio-Display dienen.

Um Fahrern von Kraftfahrzeugen eine Zielführung zu geben, ist es bekannt, Richtungsinformationen im Kraftfahrzeug auszugeben. Ein Fahrziel wird über eine Tastatur (dies kann auch die Radiotastatur sein) eingegeben und an eine Leitzentrale übermittelt. Des weiteren wird der Standort des Fahrzeugs an die Leitzentrale übermittelt. Dieser kann einmalig eingegeben und dann durch Trägheitsmessungen aktualisiert.werden oder er wird mittels eines GPS (Global Positioning System) ermittelt. Mittels dieser Informationen ist es möglich, eine Ziel-Richtungsinformation zu ermitteln, die im Fahrzeug angezeigt werden kann. So kann die Richtung zum eingegebenen Fahrziel oder auch die Richtung zu einem Zwischenziel angezeigt werden. Derartige Zwischenziele können in der Leitzentrale festgelegt werden, wobei eine Fahrstreckenminimierung oder eine Fahrzeitminimierung möglich ist. Beispielsweise können durch Angabe von Zwischenzielen auch auf der direkten Fahrstrecke befindliche Staus umfahren werden.

Erfindungsgemäß wird zur Anzeige der Richtungsinformation die alphanumerische Anzeigeeinrichtung 1, die sowieso im Fahrzeug angeordnet ist, genutzt. Die Richtungsinformation besteht aus der Kombination eines Positionszeichens 2 mit Zielzeichen 3. Zur Bildung beider Zeichen 2, 3 werden alphanumerische Zeichen des vorhandenen Zeichensatzes verwendet, so daß keinerlei zusätzlicher Aufwand entsteht.

Das Positionszeichen 2 ist im Beispiel aus einem Größerals-Zeichen 4 und einem Kleiner-als-Zeichen 5 zusammengesetzt und wird immer in der Mitte der Anzeigeeinrichtung dargestellt. Die Zielzeichen 3a bis 3e werden je nach Lage des Ziels aus verschiedenen alphanumerischen Zeichen gebildet, so daß eine deutliche Kennzeichnung der Zielrichtung erfolgt. So soll die Lage des Ziels relativ zur aktuellen Position in Figur 1a etwa 315°, in Figur 1b bei 0° (Richtung zum Ziel ist o.k.), in Figur 1c etwa 67,5°, in Figur 1d etwa bei 90° und in Figur 1e etwa bei 180° (Ziel hinter dem Fahrzeug) liegen. Die Zielzeichen 3b und 3e bestehen aus je zwei alphanumerischen Zeichen, wohingegen die restlichen Zielzeichen 3a, 3c, 3d aus nur einem alphanumerischen Zeichen gebildet werden. Auf zwei Zeilen der Anzeigeeinrichtung 1 werden mittels alphanumerischer Zeichen Richtungsinformationen ausgegeben. Die Zielrichtung kann dabei in 22,5°-Schritten relativ detailliert abgelesen werden.

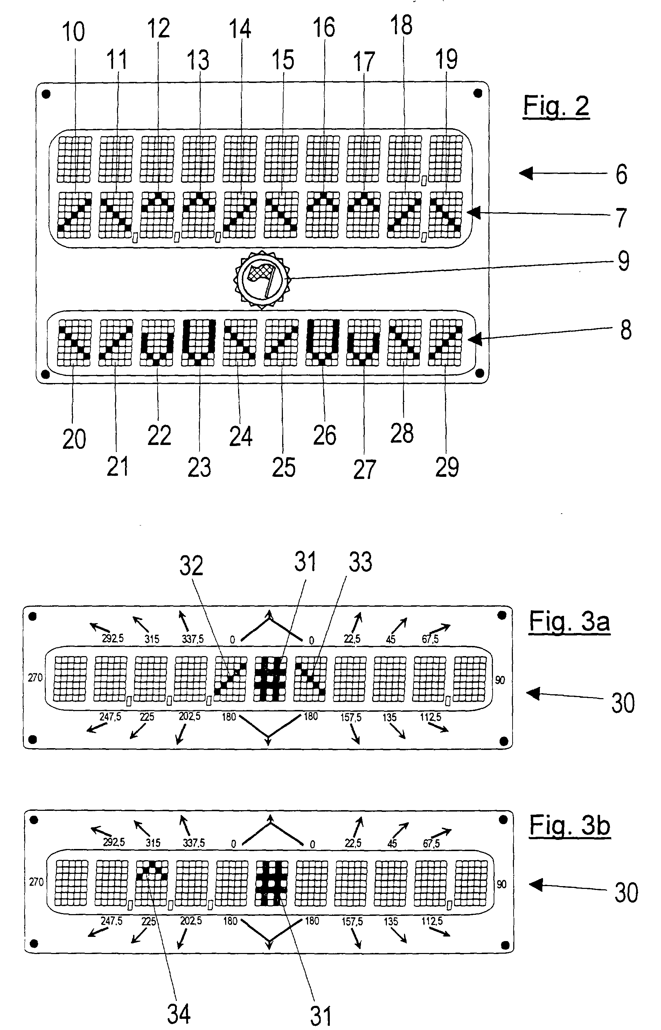

In Figur 2 ist eine alphanumerische Anzeigeeinrichtung 6 dargestellt, wobei auch hier zwei Zeilen 7, 8 zur Ziel-Richtungsinformation Anwendung finden. Mittig zwischen den beiden Zeilen 7, 8 ist jedoch ein Positionszeichen 9 unveränderlich auf einem Gehäuseabschnitt der Anzeigeeinrichtung 6 aufgebracht worden. Es soll den momentanen Standort des Kraftfahrzeugs symbolisieren. Zielzeichen werden je nach Lage des Ziels aus in Zeile 7 und/oder Zeile 8 angeordneten alphanumerischen Zeichen gebildet. In Figur 2 sind beispielhaft alle zur Anwendung kommenden alphanumerischen Zeichen gezeigt, wobei diese beim erfindungsgemäßen Verfahren nie gleichzeitig angezeigt werden. Die Zeile 7 besteht aus den Feldern 10 bis 19 und die Zeile 8 aus den Feldern 20 bis 29. Es sind die Zeichen in

| Feld | Ziel etwa in Richtung |
|---|---|
| 14 und 15 | 0° (richtige Richtung) |
| 16 | 22,5° |
| 17 | 45° |
| 18 | 67,5° |
| 19 und 29 | 90° (Ziel rechts) |
| 28 | 112,5° |
| 27 | 135° |
| 26 | 157,5° |
| 25 und 24 | 180° (Ziel hinter dem Fahrzeug) |
| 23 | 202,5° |
| 22 | 225° |
| 21 | 247,5° |
| 20 und 10 | 270° (Ziel links) |
| 11 | 292,5° |
| 12 | 315° |
| 13 | 337,5° |

aktiv, wenn das Ziel in etwa der angegebenen Richtung liegt. Auch so sind mit einfachsten Mitteln unter Verwendung einer vorhandenen Anzeigeeinrichtung 6 Richtungsinformationen ausgebbar.

Im dritten Ausführungsbeispiel (Figur 3a und 3b) ist eine einzeilige Anzeigeeinrichtung 30 im Kraftfahrzeug vorgesehen, die nun auch für die Anzeige von Richtungsinformationen genutzt wird. Es wird ein Positionszeichen 31 in Form eines zum alphanumerischen Zeichensatz gehörenden Doppelkreuzes zentral angezeigt. Des weiteren werden wiederum Zielzeichen von alphanumerischen Zeichen gebildet. In Figur 3a wird ein Zielzeichen von zwei Schrägstrichen 32, 33 links und rechts des Positionszeichens 31 gebildet, so daß eine Zielrichtung von 0° (Ziel voraus) angezeigt wird. Bei entgegengesetzter Ausrichtung der Schrägstriche 32, 33 läge das Ziel in 180° zur aktuellen Position. In Figur 3b ist ein Zielzeichen 34 zur Ausgabe der Zielposition in 315° gezeigt. Weitere Zielzeichen wie v, V, >, < kommen zum Einsatz. Die Winkelangaben mit Pfeilen auf dem Gehäuse der Anzeigeeinrichtung 30, vereinfachen den Gewöhnungsprozeß an die Art der Anzeige von Richtungsinformationen, sind jedoch nicht zwingend erforderlich. Die Zielrichtung ist durch die Kombination des Positionszeichens 31 mit Zielzeichen problemlos und schnell ablesbar.

## Patentansprüche

1. Verfahren zur Anzeige einer Richtungsinformation in einem Kraftfahrzeug, **dadurch gekennzeichnet, daß** die Richtungsinformation aus einer richtungweisenden Kombination eines Zielzeichens (3a bis e; 10-29; 32-34) mit einem Positionszeichen (2; 9; 31) besteht, wobei zumindest das Zielzeichen (3a bis e; 10-29; 32-34) aus einem oder mehreren alphanumerischen Zeichen besteht und auf einer vorhandenen alphanumerischen Anzeigeeinrichtung (1; 6; 30) im Kraftfahrzeug angezeigt wird.

2. Verfahren nach Anspruch 1, **dadurch gekennzeichnet, daß** auch das Positionszeichen (2; 31) aus einem oder mehreren alphanumerischen Zeichen besteht und auf der alphanumerischen Anzeigeeinrichtung (1; 30) angezeigt wird.

3. Verfahren nach Anspruch 1 und 2, **dadurch gekennzeichnet, daß** das Positionszeichen (2; 31) in der Mitte einer Zeile der Anzeigeeinrichtung (1; 30) angezeigt wird, wobei die anzeigende Zeile je nach der momentanen Relativposition zum Zielzeichen (3a bis e) gewechselt wird.

4. Verfahren nach zumindest einem der Ansprüche 1 bis 3, **dadurch gekennzeichnet, daß** das Positionszeichen (2) aus zwei alphanumerischen Zeichen (4, 5) besteht, wobei diese beiden alphanumerischen Zeichen (4, 5) benachbart zueinander oder mit einem Feld Zwischenraum auf der Anzeigeeinrichtung (1) angezeigt werden.

5. Verfahren nach Anspruch 1, **dadurch gekennzeichnet, daß** das Positionszeichen (9) in der Mitte zwischen zwei Zeilen (7, 8) der Anzeigeeinrichtung (6) fest auf einem Rahmen der Anzeigeeinrichtung (6) angeordnet und das Zielzeichen variabel innerhalb der beiden Zeilen (7, 8) angezeigt wird.

6. Verfahren nach zumindest einem der Ansprüche 1 bis 5, **dadurch gekennzeichnet, daß** verschiedene alphanumerische Zeichen zur Bildung des Zielzeichens (3a bis e; 34) genutzt werden, was in Abhängigkeit der Relativposition des Zielzeichens (3a bis e; 34) zum Positionszeichen (2; 9; 31) erfolgt.

7. Verwendung einer im Kraftfahrzeug angeordneten mehrstelligen alphanumerischen Anzeigeeinrichtung (1; 6; 30) zur Anzeige einer Ziel-Richtungsinformation, wobei aus Zeichen eines vorhandenen alphanumerischen Zeichensatzes zumindest ein Zielzeichen (3a bis e; 10-29; 32-34) gebildet und angezeigt wird, dessen Art und/oder relative Lage zu einem Positionszeichen (2; 9; 31) richtungweisend ist.

## Claims

1. Method for indicating directional information in a motor vehicle, **characterised in that** the directional information consists of a direction-indicating combination of a destination sign (3a to e; 10-29; 32-34) with a position sign (2; 9; 31), wherein at least the destination sign (3a to e; 10-29; 32-34) consists of one or more alphanumeric characters and is displayed on an existing alphanumeric indicator (1; 6; 30) in the motor vehicle.

2. Method according to claim 1, **characterised in that** the position sign (2; 31) too consists of one or more alphanumeric characters and is displayed on the alphanumeric indicator (1; 30).

3. Method according to claims 1 and 2, **characterised in that** the position sign (2; 31) is displayed in the middle of a row of the indicator (1; 30), wherein the display line is changed according to the instantaneous relative position to the destination sign (3a to e).

4. Method according to one or more of claims 1 to 3, **characterised in that** the position sign (2) consists of two alphanumeric characters (4, 5), wherein these two alphanumeric characters (4, 5) are displayed adjacent to each other or with a space panel between them on the indicator (1).

5. Method according to claim 1, **characterised in that** the position sign (9) is arranged in the middle between two rows (7, 8) of the indicator (6) permanently on a frame of the indicator (6) and the destination sign is displayed variably within the two rows (7, 8).

6. Method according to one or more of claims 1 to 5, **characterised in that** different alphanumeric characters are used to form the destination sign (3a to e; 34), which is effected as a function of the relative position of the destination sign (3a to e; 34) to the position sign (2; 9; 31).

7. Use of a multi-digit alphanumeric indicator (1; 6; 30) arranged in the motor vehicle for the display of destination and directional information, wherein from characters of an existing set of alphanumeric characters is formed and displayed at least one destination sign (3a to e; 10-29; 32-34) of which the nature and/or relative position to a position sign (2; 9; 31) is indicative of direction.

## Revendications

1. Procédé d'affichage d'une information de direction dans un véhicule automobile, **caractérisé en ce que** l'information de direction est formée par une combinaison indiquant la direction d'un symbole de but (3a à 3e; 10-29 ; 32-34) et d'un symbole de position (2 ; 9 ; 31), au moins le symbole de but (3a à 3e; 10-29 ; 32-34) étant formé d'un ou de plusieurs signes alphanumériques et étant affiché sur un dispositif d'affichage alphanumérique (1 ; 6 ; 30) prévu dans le véhicule.

2. Procédé selon la revendication 1, **caractérisé en ce que** le symbole de position (2 ; 31) est également formé d'un ou de plusieurs signes alphanumériques et est affiché sur un dispositif d'affichage alphanumérique (1 ; 30).

3. Procédé selon les revendications 1 et 2, **caractérisé en ce que** le symbole de position (2 ; 31) est affiché au milieu d'une ligne du dispositif d'affichage alphanumérique (1 ; 30), la ligne d'affichage changeant en fonction de la position relative instantanée par rapport au symbole de but (3a à e)

4. Procédé selon au moins une des revendications 1 à 3, **caractérisé en ce que** le symbole de position (2) est formé de deux signes alphanumériques (4, 5), les deux signes alphanumériques (4, 5) étant affichés l'un à côté de l'autre ou avec un espacement d'un champ sur le dispositif d'affichage alphanumérique (1).

5. Procédé selon la revendication 1, **caractérisé en ce que** le symbole de position (9) est disposé de manière fixe au milieu entre deux lignes (7,8) du dispositif d'affichage (6), sur un cadre du dispositif d'affichage (6), et **en ce que** le repère de but est affiché de manière variable à l'intérieur desdites deux lignes (7, 8).

6. Procédé selon au moins une des revendications 1 à 5, **caractérisé en ce qu'**on utilise différents signes alphanumériques pour former le symbole de but (3a à e ; 34), ce qui est réalisé en fonction de la position relative du symbole de but (3a à e ; 34) par rapport au symbole de position (2 ; 9 ; 31).

7. Utilisation d'un dispositif d'affichage (1 ; 6 ; 30) alphanumérique à plusieurs positions disposé à l'intérieur d'un véhicule pour afficher une information de direction de but, au moins un symbole de but (3a à 3e ; 10-29 ; 32-34), dont le type et/ou la position relative par rapport à un symbole de position (2 ; 9 ; 31) indiquent la direction, étant formé de signes appartenant à un jeu existant de signes alphanumériques et étant affiché.
